# EUROPÄISCHE PATENTSCHRIFT

(11) **EP 0 757 762 B1**
(45) Veröffentlichungstag und Bekanntmachung des Hinweises auf die Patenterteilung: **21.07.1999**
(21) Anmeldenummer: 95908867.5
(22) Anmeldetag: 28.02.1995
(51) Int. Cl.: F16H 21/52, B27B 19/00

(54) **GETRIEBE, DAS EINE DREHBEWEGUNG IN EINE HIN- UND HERBEWEGUNG WANDELT**
GEAR FOR CONVERTING A ROTARY MOVEMENT INTO A RECIPROCATING MOVEMENT
MECANISME DE CONVERSION D'UN MOUVEMENT ROTATIF EN UN MOUVEMENT ALTERNATIF

(43) Veröffentlichungstag der Anmeldung: 12.02.1997
(73) Patentinhaber: SYNTHES AG Chur, 7002 Chur (CH)
(72) Erfinder: TANNER, Peter, CH-4416 Bubendorf (CH); HERZOG, Daniel, CH-4416 Bubendorf (CH)
(74) Vertreter: Lusuardi, Werther Giovanni, Dr.
(86) Internationale Anmeldenummer: CH9500044
(87) Internationale Veröffentlichungsnummer: WO9627093

(56) Entgegenhaltungen:
- EP-A- 0 269 564
- DE-C- 650 678
- DE-C- 808 873
- US-A- 5 237 884

## Beschreibung

Die Erfindung betrifft ein Getriebe nach dem Patentanspruch 1.

Getriebe, die eine Drehbewegung in eine Hin- und Herbewegung wandeln, sind schon lange bekannt. Sie werden beispielsweise bei motorbetriebenen Sägen in der Chirurgie verwendet, können aber auch in vielen anderen technischen Arbeitsvorrichtungen angewendet werden.

Eine motorbetriebene Säge für die Chirurgie, die ein solches Getriebe aufweist, beschreibt beispielsweise die DT-PS 24 00 696. Sie besitzt einen langgestreckten Sägeblatthalter, der ein Sägeblatt trägt und in einem Sägegehäuse gelagert ist. Er ist an dem vom Sägeblatt abgewandten Ende an einem mit der Welle des Antriebsmotors verbundenen Exzenterzapfen angelenkt. In seinem Mittelbereich ist der Sägeblatthalter mittels eines Führungszapfens längsverschieblich und schwenkbar im Sägegehäuse gelagert und führt, wenn der Antriebsmotor läuft, Schwenkbewegungen aus. Das fest mit dem Sägeblatthalter verbundene Sägeblatt führt dann Hin- und Herbewegungen von einer durch den Bau des Getriebes vorgegebenen festen Amplitude aus.

Eine weitere Vorrichtung, welche eine Rotationsbewegung einer Achse in eine oszillierende Schwenkbewegung eines Werkzeuges umsetzt, ist aus der US 5,237,884 SETO bekannt, die die Merkmale des Oberbegriffs von Anspruch 1 zeigt. Auch bei dieser bekannten Vorrichtung ist die Amplitude der Schwenkbewegung durch den Bau des Getriebes festgelegt und kann nicht variiert werden.

Der Nachteil dieser beiden bekannten Getriebe besteht darin, dass die Amplitude der Hin- und Herbewegung höchstens durch Umbau am Getriebe, nicht aber durch einfache Handhabung vergrössert oder verkleinert werden kann. Dies wäre aber in vielen Fällen intraoperativ von Vorteil.

Eine andere Vorrichtung zur Umwandlung einer rotierenden Bewegung in eine Hin- und Herbewegung mit verstellbarem Hub ist in der EP 0 269 564 HUBSCHMID offenbart. Die rotierende Bewegung einer motorgetriebenen Achse wird in eine oszillierende Hubbewegung umgewandelt.

Der Erfindung liegt daher die Aufgabe zugrunde, ein Getriebe zu schaffen, bei dem ohne Umbau der Arbeitseinrichtung die Amplitude der vom Getriebe erzeugten Hin- und Herbewegung eingestellt werden kann.

Die Aufgabe wird erfindungsgemäss durch die Merkmale des Kennzeichenteils des Anspruchs 1 gelöst, die übrigen Ansprüche betreffen vorteilhafte Ausführungsformen der Erfindung.

Die Übertragung der Bewegung erfolgt bei der Erfindung mittels einer Schwinggabel, deren Drehpunk zwischen dem Antrieb und dem getriebenen Teil auf der Längsachse (x-Achse) verschoben werden kann. Dadurch wird das Hebelverhältnis verstellt, was eine Drehwinkelveränderung der getriebenen Seite zur Folge hat. Die Funktionsweise kann mit einem Verstärker verglichen werden, der ein Grundsignal im gleichen Masse erhöhen wie auch reduzieren kann.

Die Erfindung wird beispielhaft in der Zeichnung erläutert, dabei zeigt die
Fig. 1 ein Teilansicht einer Arbeitsvorrichtung mit einem erfindungsgemässen Getriebe;
Fig. 2 eine schematische Darstellung eines erfindungsgemässen Getriebes in einer ersten Stellung;
Fig. 3 eine schematische Darstellung des Getriebes nach Fig. 2, in einer zweiten Stellung;
Fig. 4 eine schematische Darstellung des Getriebes nach Fig. 2, in einer dritten Stellung; und
Fig. 5 eine schematische Darstellung des Getriebes nach Fig. 2, in einer vierten Stellung.

Die Teile sind in allen Figuren, soweit sie dort gezeichnet sind, mit denselben Bezugszeichen gekennzeichnet, so dass im Folgenden alle Figuren gemeinsam besprochen werden.

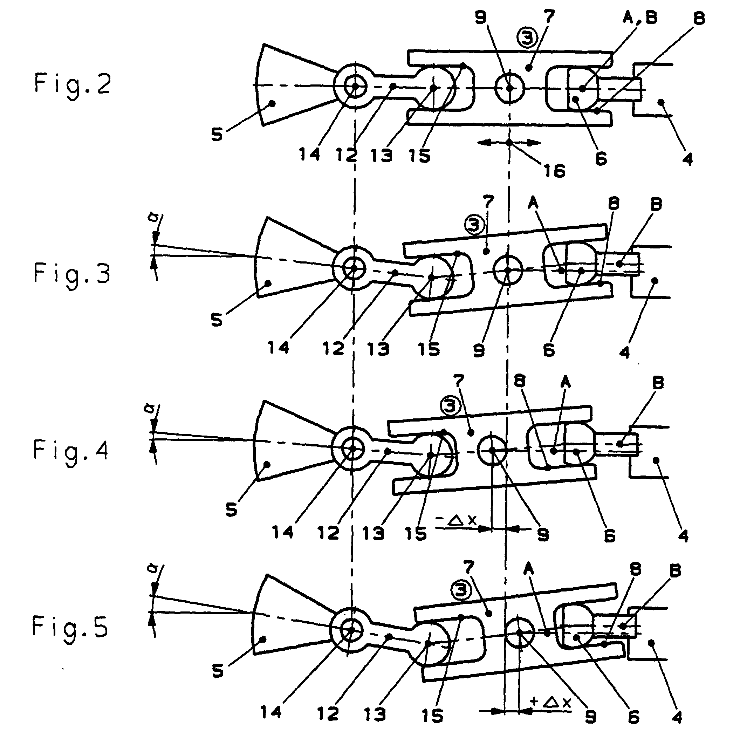

Die Fig. 2 - 5 zeigen in verschiedenen Situationen ein erfindungsgemässes Getriebe 3. Es besteht aus einer Antriebswelle 4, die das Getriebe 3 mit einem nicht gezeichneten Motor verbindet und einen Antriebskopf 6 trägt, einem Übertragungsglied 7, das mit einem zweiten Drehstift 9 mit einem Gehäuse 2 verbunden ist, und einem Werkzeugträger 12, der mit einem ersten Drehstift 14 mit dem Gehäuse verbunden ist und einen Trägerkopf 13 besitzt. An den Werkzeugträger 12 wird ein entsprechendes Werkzeug 5 angebaut.

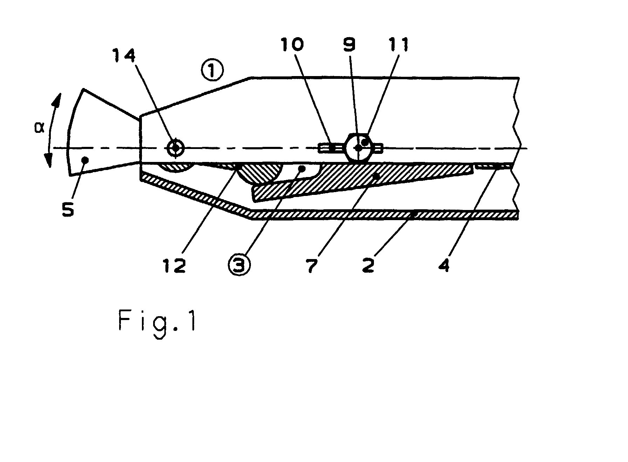

In Fig. 1 ist beispielhaft ein werkzeugseitiges Ende einer motorbetriebenen Arbeitsvorrichtung 1, hier einer Säge, mit dem erfindungsgemässen Getriebe 3, von dem nur Teile sichtbar sind, dargestellt. Sie wird von oben gesehen. In der Figur sind hälftig im oberen Teil eine Aufsicht, im unteren Teil ein Schnitt in der Höhe der Mittelachse der Arbeitsvorrichtung 1 gezeichnet. Die Arbeitsvorrichtung besitzt ein Gehäuse 2, das vorteilhafterweise aus einem Gehäuseboden und einem Deckel verschraubt wird. (Diese Teile sind hier nicht gesondert dargestellt.) Im unteren Teil der Figur erkennt man einige Teile des Getriebes 3, nämlich die Antriebswelle 4, das Übertragungsglied 7, den Werkzeugträger 12, den ersten Drehstift 14, eine Mutter 11, mit der man den hier nicht gezeichneten zweiten Drehstift 9 in einer gezeichneten geradlinigen Durchfräsung 10 des Gehäuses 2 festschrauben kann und die Säge 5, die als Werkzeug in der Arbeitsvorrichtung 1 dient. Um die Figur 1 zu verstehen, muss man die schematische Darstellungen des erfindungsgemässen Getriebes 3 nach den Figuren 2 bis 5 betrachten.

In den Figuren 2 bis 5 wird nun im Einzelnen gezeigt, wie mit dem erfindungsgemässen Getriebe 3 die vom nicht gezeichneten Motor erzeugte Drehbewegung in eine durch den Winkel a angedeutete Hin- und Herbewegung des Werkzeuges, deren Amplitude einstellbar ist, gewandelt wird.

Die vom Motor bewirkbare Drehung der Antriebswelle 4, von der nur ein werkzeugseitiges Ende gezeichnet ist, ist von dem in diese eingefügten Antriebskopf 6 in eine exzentrische Drehung wandelbar. Das Übertragungsglied 7 verbindet beweglich den Antriebskopf 6 mit dem beweglichen Werkzeugträger 12, der das Werkzeug 5 trägt. Das Übertragungsglied 7 einerseits und der Werkzeugträger 12 mit dem Werkzeug führen gemeinsam gegenläufige Hin-und Herbewegungen aus, sobald der Motor läuft. Dabei ist durch die Veränderung der Lage des Übertragungsgliedes 7 gegenüber dem Antriebskopf 6 die Amplitude der Hin-und Herbewegung des Werkzeuges 5 veränderbar. Dies wird im Folgenden näher erläutert.

Die Antriebswelle 4 trägt an ihrem Ende den Antriebskopf 6. Er weist eine Antriebskopf-Achse B auf, die parallel, aber seitlich versetzt zu einer Antriebsachse A der Antriebswelle 4 verläuft. Dreht sich die Antriebswelle 4, so führt der Antriebskopf 6 exzentrische Drehbewegungen um die Antriebsachse A aus. In der Figur 2 liegt die Antriebskopf-Achse B in der Höhe der Antriebsachse A, in dieser zweidimensionalen Zeichnung decken sich so die Antriebskopf-Achse B mit der Antriebsachse A, sie sind aufeinanderliegend gezeichnet. In den Figuren 3 bis 5 hat sich die Antriebswelle 4 gedreht und die Antriebskopf-Achse B liegt neben der Antriebsachse A, sie fällt also in den betreffenden Figuren nicht mit der Antriebsachse A zusammen und ist getrennt gezeichnet.

Mit dem Antriebskopf 6 ist werkzeugseitig das Übertragungsglied 7 verbunden, das seinerseits mittels des zweiten Drehstifts 9 beweglich mit dem Gehäuse 2 verbunden ist. Das Übertragungsglied 7 ist antriebsseitig so am exzentrisch drehbaren Antriebskopf 6 eingepasst, dass die Drehung der Antriebswelle 6 in eine Winkelbewegung des Übertragungsgliedes 7 um den zweiten Drehstift 9 wandelbar ist. Dazu besitzt das Übertragungsglied 7 antriebsseitig ein erstes Maul 8, in das der Antriebskopf 6 hineinragt. Die Seiten des Antriebskopfs 6 in Richtung auf die Innenseiten des ersten Maul es 8 sind kugelig ausgebildet. Die Maulweite des Übertragungsgliedes 7 entspricht dem Durchmesser des kugeligen Teils des Antriebkopfes 6, so dass der Antriebskopf 6 bei jeder Drehstellung der Antriebswelle 4 die Innenseiten des ersten Mauls 8 nur an zwei Punkten berührt. Die Breite des ersten Mauls 8 ist mindestens so gross wie der Durchmesser des Kreises, den der Mittelpunkt des kugeligen Antriebskopfes (6) infolge seiner Exzentrizität zur Antriebsachse (A) bei einer Umdrehung des Antriebswelle (4) durchläuft.

Der zweite Drehstift 9 ist zusammen mit dem Übertragungsglied 7 in einer Durchfräsung 10 des Gehäuses 2 verschiebbar. Bei diesen Verschiebungen ändert sich gleichzeitig die Lage des ersten Mauls 8 des Übertragungsgliedes 7 gegenüber dem Antriebskopf 6, so dass die Grösse der Winkelbewegung des Übertragungsgliedes 7 durch die exzentrische Bewegung der Antriebskopfes 5, bezogen auf die Antriebsachse A, geändert wird. Die Lage des zweiten Drehstiftes 9 im Gehäuse 2 kann z.B. mittels mindestens eines Gewindes und einer Mutter 11, beispielsweise einer Klemmutter, in der Durchfräsung 10 eingestellt werden. Es ist aber auch eine motorische Verstellung des zweiten Drehstiftes 9 möglich. Wird die Lage des zweiten Drehstiftes 9 in Richtung auf die Antriebseite um den Betrag +Δx verschoben, so wird die Winkelbewegung des Übertragungsgliedes 7 auf den Winkel α bei gleich grosser Drehung der Antriebswelle 4 vergrössert (vergleiche die Figur 3 mit der Figur 5), wird sie in Richtung auf die Werkzeugseite um den Betrag -Δx verschoben, wird die Winkelbewegung auf den Winkel α verkleinert (vergleiche die Figur 3 mit der Figur 4). Die Amplitude der Winkelbewegung des Übertragungsgliedes 7 ist somit durch
das Verschieben des zweiten Drehstiftes 9 längs der Durchfräsung 10 des Gehäuses 2 einstellbar.

Mit dem Übertragungsglied 7 ist werkzeugseitig der Werkzeugträger 12 verbunden, an dem werkzeugseitig fest das Werkzeug 5, hier ein Sägeblatt, angebracht ist. Ferner ist der Werkzeugträger 12 werkzeugseitig über den ersten Drehstift 14 mit einem festen Punkt des Gehäuses 2 drehbar verbunden. Der Werkzeugträger 12 ist antriebsseitig so in dem Übertragungsglied 7 eingepasst, dass die Winkelbewegung des Übertragungsgliedes 7 eine gegenläufige Winkelbewegung des Werkzeugträgers 12 hervorruft. Dazu besitzt der Werkzeugträger 12 einen Trägerkopf 13, der in ein werkzeugseitiges zweites Maul 15 des Übertragungsgliedes 7 hineinragt. Die Seiten des Trägerkopfes 13 in Richtung auf die Innenseiten des ersten Maules sind zylindrisch ausgebildet. Die Maulweite des Übertragungsgliedes 7 entspricht dem Durchmesser des zylindrischen Teiles des Trägerkopfes 13. Der Werkzeugträger 12 mit seinem Werkzeug 5 führt somit Hin- und Herbewegungen aus, die gegenläufig, aber in Ihrer Amplitude proportional zu den Winkelbewegungen des Übertragungsgliedes 7 verlaufen. Damit ist auch die Amplitude der Hin- und Herbewegung des Werkzeuges 5 durch das Verschieben des zweiten Drehstiftes 9 längs der Durchfräsung 10 des Gehäuses 2 einstellbar.

Das Getriebe 3 ermöglicht somit, die Drehbewegung der Antriebswelle 4 in eine Hin- und Herbewegung des Werkzeug 5 zu wandeln, wobei die Amplitude dieser Hin- und Herbewegung durch einfaches Verstellen der Lage des zweiten Drehstiftes 9 am Gehäuse 2 verstellbar ist. Diese Verstellung kann gegebenenfalls motorisch erfolgen.

Selbstverständlich können bei einer Arbeitsvorrichtung auch Teile in anderer Weise ausgeführt werden, wenn nur diese Arbeitsvorrichtung die kennzeichnende Merkmale nach Anspruch 1 aufweist.

## Patentansprüche

1. Getriebe für die schwenkbare Bewegung eines motorgetriebenen Werkzeuges (5), welches
A) in ein Gehäuse (2) einer motorangetriebenen Arbeitsvorrichtung (1) einbaubar ist und eine durch deren Motor erzeugte Drehbewegung in eine Winkelbewegung wandelt;
B) auf der Antriebsseite einen vom Motor über mindestens eine Antriebswelle (4) verbundenen exzentrisch drehbaren Antriebskopf (6) aufweist und an der Arbeitsseite einen Werkzeugträger (12) mit Trägerkopf (13) besitzt, wobei der Werkzeugträger (12) durch einen ersten Drehstift (14) mit einer festen Stelle des Gehäuses (2) schwenkbar verbunden ist und an seinem freien Ende ein Werkzeug (5) trägt; und
C) das Getriebe (3) ein zwischen Antriebskopf (6) und Werkzeugträger (12) angeordnetes Übertragungsglied (7) besitzt, welches den Antriebskopf (6) und den Trägerkopf des Werkzeugträges (12) beweglich miteinander verbindet, dadurch gekennzeichnet, dass
D) das Übertragungsglied (7) durch einen zweiten Drehstift (9) mit dem Gehäuse (2) schwenkbar verbunden ist; und
E) Mittel zur variablen Einstellung der relativen Lage des zweiten Drehstiftes (9) gegenüber dem Antriebskopf (6) und dem Trägerkopf (13) in Richtung der Antriebsachse (A) vorgesehen sind, wobei durch Veränderung der relativen Lage des Übertragungsgliedes (7) die Amplitude der Winkelbewegung des Werkzeuges (5) variabel einstellbar ist.

2. Getriebe nach Anspruch 1, dadurch gekennzeichnet, dass das Übertragungsglied (7) antriebsseitig so am exzentrisch drehbaren Antriebskopf (6) eingepasst ist, dass die Drehung der Antriebswelle (4) in eine Winkelbewegung des Übertragungsgliedes (7) um den zweiten Drehstift (9) wandelbar ist, wobei die Lage des zweiten Drehstiftes (9) längs einer Durchfräsung (10) am Gehäuse (2) einstellbar ist.

3. Getriebe nach Anspruch 2, dadurch gekennzeichnet, dass das Übertragungsglied (7) antriebsseitig ein erstes Maul (8) besitzt, der Antriebskopf (6) in das erstes Maul (8) des Übertragungsgliedes (7) hereinragt, der Antriebskopf (6) in Richtung auf die Innenseiten des ersten Maules (8) kugelig ausgebildet ist und die Maulweite des Übertragungsgliedes (7) dem Durchmesser des Antriebskopfes (6) entspricht.

4. Getriebe nach Anspruch 3, dadurch gekennzeichnet, dass die Breite des ersten Mauls (8) mindestens so gross ist wie der Durchmesser des Kreises, den der Mittelpunkt des kugeligen Antriebskopfes (6) infolge seiner Exzentrizität zur Antriebsachse (A) bei einer Umdrehung des Antriebswelle (4) durchläuft.

5. Getriebe nach Anspruch 1, dadurch gekennzeichnet, dass der Werkzeugträger (12) antriebsseitig mit dem Trägerkopf (13) in das Übertragungsglied (7) so eingepasst ist, dass die Winkelbewegungen des Übertragungsgliedes (7) gegenläufig in Winkelbewegungen des Werkzeugträgers (12) um den ersten Drehstift (14) umsetzbar sind.

6. Getriebe nach Anspruch 5, dadurch gekennzeichnet, dass das Übertragungsglied (7) werkzeugseitig ein zweites Maul (15) besitzt, der Werkzeugträger (12) mit dem Trägerkopf (13) in das zweite Maul (15) des Übertragungsgliedes (7) hereinragt und der Trägerkopf (13) senkrecht zur Ebene des Werkzeugträgers (12) zylindrisch ausgebildet ist und die Maulweite des zweiten Mauls 15 des Übertragungsgliedes (7) dem Durchmesser des zylindrischen Teils des Trägerkopfes (13) entspricht.

7. Getriebe nach einem der Ansprüche 2 - 6, dadurch gekennzeichnet, dass die Einstellung des zweiten Drehstiftes (9) längs der Durchfräsung am Gehäuse von Hand erfolgt.

8. Getriebe nach einem der Ansprüche 2 - 6, dadurch gekennzeichnet, dass die Einstellung des zweiten Drehstiftes (9) längs der Durchfräsung am Gehäuse motorisch erfolgt.

9. Getriebe nach einem der Ansprüche 1 - 8, dadurch gekennzeichnet, dass die Amplitudenverstellung stufenlos ausgebildet ist.

10. Verwendung des Getriebes nach einem der Ansprüche 1 - 9 für eine oszillierende Säge.

## Claims

1. A motion converter for the to-and-fro displacement of a motor-driven tool (5), which
A) is integrable into a housing (2) of a motor-driven operational system (1) and converts a motor-generated rotation into a to-and-fro displacement;
B) on its drive side comprises an eccentrically rotating drive head (6) connected at least through one drive shaft (4) to the motor and on its operational side comprises a tool holder (12) with holder head (13), said tool holder (12) being pivotably mounted at a fixed position in the housing (2) by means of a first pivot pin (14) and bearing at its free end a tool (5); and
C) the motion converter (3) comprises a transmission element (7) mounted between the drive head (6) and the tool holder (12) to displaceably connect the holder head of the tool holder (12) to the drive head (6),
characterized in that
D) said transmission element (7) is pivotably connected through a second pivot pin (9) to the housing (2); and
E) means for the variable adjustment of the relative position of the second pivot pin (9) relative to the drive head (6) and the holder head (13) in the direction of the drive axis (A) are provided, whereby the excursion of the to-and-fro displacement of the tool (5) is variably adjustable by changing the relative position of the transmission element (7).

2. Motion converter defined in claim 1, characterized in that on its drive side the transmission element (7) is matched in such manner to the eccentrically rotation drive head (6) that the rotation of the drive shaft (4) is converted into an angular displacement of the transmission element (7) about the second pivot pin (9), the position of the second pivot pin (9) being adjustable along a milling (10) in the housing (2).

3. Motion converter defined in claim 2, characterized in that on its drive side the transmission element (7) comprises a first jaw (8), in that the drive head (6) enters the first jaw (8) of the transmission element (7), in that the drive head (6) is spherical in the direction of the insides of the first jaw (8) and the width of the jaw of the transmission element (7) corresponds to the diameter of the drive head (6).

4. Motion converter defined in claim 3, characterized in that the width of the first jaw (8) is at least as large as the diameter of the circular path followed by the center of the spherical drive head (6) on account of its eccentricity relative to the drive axis (A) during one revolution of the drive shaft (4).

5. Motion converter defined in claim 1, characterized in that on its drive side the tool holder (12) comprising the holder head (13) is fitted in such manner into the transmission element (7) that the angular displacements of the transmission element (7) are convertable into opposite angular displacements of the tool holder (12) about the first pivot pin (14).

6. Motion converter defined in claim 5, characterized in that on its tool side the transmission element (7) comprises a second jaw (15), in that the tool holder (12) comprising the holder head (13) enters the second jaw (15) of the transmission element and the holder head (13) is cylindrical perpendicularly to the plane of the tool holder (12) and the width of the jaw of the second jaw (15) of the transmission element (7) corresponds to the diameter of the cylindrical portion of the holder head (13).

7. Motion converter defined in one of claims 2 through 6, characterized in that the second pivot pin (9) is manually adjusted along the milling in the housing.

8. Motion converter defined in one of claims 2 through 6, characterized in that the adjustment of the second pivot pin (9) along the milling in the housing is motor-driven.

9. Motion converter defined in one of the claims 1 through 8, characterized in that the adjustment of excursion is continuous.

10. Use of the motion converter defined in one of claims 1 through 9 in an oscillating saw.

## Revendications

1. Mécanisme pour le mouvement pivotant d'un outil (5) entraîné par moteur et
A) qui peut être incorporé dans un boîtier (2) d'un dispositif d'usinage (1) entraîné par moteur et qui transforme un mouvement de rotation produit par son moteur en un mouvement angulaire,
B) qui présente du côté de l'entraînement une tête d'entraînement (6), qui peut tourner de manière excentrée et qui est reliée au moteur par au moins un arbre d'entraînement (4), et qui comporte du côté actif un support d'outil (12) avec une tête porteuse (13), le support d'outil (12) étant relié de manière pivotante par une première tige de rotation (14) à un endroit fixe du boîtier (2) et portant à son extrémité libre un outil (5), et
C) le mécanisme (3) comportant un organe de transmission (7) qui est agencé entre la tête d'entraînement (6) et le support d'outil (12) et qui relie l'une à l'autre de manière mobile la tête d'entraînement (6) et la tête porteuse du support d'outil (12),
***caractérisé en ce que :***
D) l'organe de transmission (7) est reliée de façon pivotante par une seconde tige de rotation (9) au boîtier (2), et
E) des moyens sont prévus pour le réglage variable de la position relative de la seconde tige de rotation (9) par rapport à la tête d'entraînement (6) et à la tête porteuse (13) en direction de l'axe d'entraînement (A), l'amplitude du mouvement angulaire de l'outil (5) pouvant être réglée de manière variable par une modification de la position relative de l'organe de transmission (7).

2. Mécanisme suivant la revendication 1, caractérisé en ce que l'organe de transmission (7) est adapté, du côté de l'entraînement, à la tête d'entraînement (6), qui peut tourner de façon excentrée, de manière à ce que les rotations de l'arbre d'entraînement (4) puissent être transformées en un mouvement angulaire de l'organe de transmission (7) autour de la seconde tige de rotation (9), la position de la seconde tige de rotation (9) pouvant être réglée sur le boîtier (2) le long d'un trou fraisé (10).

3. Mécanisme suivant la revendication 2, caractérisé en ce que l'organe de transmission (7) comporte du côté de l'entraînement une première ouverture (8), en ce que la tête d'entraînement (6) pénètre dans la première ouverture (8) de l'organe de transmission (7), en ce que la tête d'entraînement (6) est réalisée en forme sphérique en direction des côtés internes de la première ouverture (8) et en ce que l'ampleur de l'ouverture de l'organe de transmission (7) correspond au diamètre de la tête d'entraînement (6).

4. Mécanisme suivant la revendication 3, caractérisé en ce que la largeur de la première ouverture (8) est au moins aussi grande que le diamètre du cercle que parcourt le centre de la tête d'entraînement (6) sphérique à la suite de son excentricité par rapport à l'axe d'entraînement (A) lors d'une rotation de l'arbre d'entraînement (4).

5. Mécanisme suivant la revendication 1, caractérisé en ce que le support d'outil (12) est adapté, du côté de l'entraînement, à la tête porteuse (13) dans l'organe de transmission (7) de façon à ce que les mouvements angulaires de l'organe de transmission (7) puissent être transformés à l'opposé en des mouvements angulaires du support d'outil (12) autour de la première tige de rotation (14).

6. Mécanisme suivant la revendication 5, caractérisé en ce que l'organe de transmission (7) comporte du côté de l'outil une seconde ouverture (15), en ce que le support d'outil (12) pénètre par la tête porteuse (13) dans la seconde ouverture (15) de l'organe de transmission (7) et en ce que la tête porteuse (13) est réalisée de manière cylindrique perpendiculairement au plan du support d'outil (12) et en ce que l'ampleur de l'ouverture de la seconde ouverture (15) de l'organe de transmission (7) correspond au diamètre de la partie cylindrique de la tête porteuse (13).

7. Mécanisme suivant l'une des revendications 2 à 6, caractérisé en ce que le réglage de la seconde tige de rotation (9) est effectué à la main le long du trou fraisé du boîtier.

8. Mécanisme suivant l'une des revendications 2 à 6, caractérisé en ce que le réglage de la seconde tige de rotation (9) est effectué par moteur le long du trou fraisé du boîtier.

9. Mécanisme suivant l'une des revendications 1 à 8, caractérisé en ce que le réglage d'amplitude est réalisé sans à-coups.

10. Utilisation du mécanisme suivant l'une des revendications 1 à 9, pour une scie oscillante.
